# DEMANDE DE BREVET EUROPEEN

(11) **EP 4 524 375 A1**
(43) Date de publication de la demande: **19.03.2025**
(21) Numéro de dépôt: 23306537.4
(22) Date de dépôt: 18.09.2023
(51) Int. Cl.: F01D 21/04, F01D 25/24, F01D 11/12, F04D 29/52, B23B 7/00, B29C 70/00, B32B 15/00

(54) **CARTER DE COMPRESSEUR BASSE PRESSION D'UNE TURBOMACHINE D'AERONEF**

(71) Demandeur: Safran Aero Boosters, 4041 Herstal (BE); SAFRAN, 75015 Paris (FR)
(72) Inventeur: MOUCHARD, Romain Jonathan, 4041 HERSTAL (BE); DORE, Antoine, 4041 HERSTAL (BE); DUNLEAVY, Patrick, 77550 Moissy-Cramayel (FR)
(74) Mandataire: Gevers Patents

(57) **Abrégé**

Carter de compresseur basse pression, rapide, d'une turbomachine d'aéronef, traversée par un fluide, ledit carter (1) comprenant une paroi annulaire (4) s'étendant le long d'un axe longitudinal dudit carter, ladite paroi annulaire (4) présentant un première zone annulaire (6) destinée à se trouver au droit d'un étage rotorique (10) dudit compresseur, ladite paroi annulaire (4) comprenant une virole de support (14), en matériau composite, et un revêtement de renfort (32) comprenant un matériau à feuilletage métallique (12), ledit revêtement de renfort (32) se trouvant sur une paroi interne (17) de ladite virole (14) au niveau de ladite première zone (6).

## Description

L'invention concerne un carter de compresseur basse pression, préférablement rapide, d'une turbomachine d'aéronef. Elle concerne également un tel compresseur et une telle turbomachine.

Dans le domaine des compresseurs basse pression de turbomachines d'aéronefs, il est connu des carters combinant des matériaux composites et des matériaux métalliques mais il est toujours attendu un carter présentant des propriétés améliorées, non seulement en termes de poids et/ou de coût de revient mais aussi de capacité de rétention de débris dans le contexte de compresseur basse pression, et en particulier dans le contexte de compresseur basse pression rapide.

L'invention a pour objectif de pallier au moins en partie les inconvénients précédents et propose à cette fin un carter de compresseur basse pression d'une turbomachine d'aéronef, ledit carter comprenant une paroi annulaire s'étendant le long d'un axe longitudinal dudit carter, ladite paroi annulaire présentant un première zone annulaire destinée à se trouver au droit d'un étage rotorique dudit compresseur, ladite paroi annulaire comprenant une virole de support, en matériau composite, et un revêtement de renfort comprenant un matériau à feuilletage métallique, ledit revêtement de renfort se trouvant sur une paroi interne de ladite virole au niveau de ladite première zone.

Ainsi, selon l'invention, grâce à l'emploi d'un matériau composite, la virole forme une base du carter, légère et peu onéreuse. Qui plus est, ladite virole est renforcée uniquement là où cela est nécessaire, ce qui contribue à limiter le poids et le coût du carter. Il est encore à noter que le choix d'un matériau à feuilletage métallique comme matériau de renfort contribue à renforcer la capacité de rétention du carter.

De préférence, le carter selon l'invention est un carter de compresseur basse pression rapide de turbomachine d'aéronef. Le terme 'rapide' désigne un compresseur basse pression pour turbomachine comprenant une soufflante et un réducteur de vitesse entre ladite soufflante et ledit compresseur. Ledit réducteur permet au compresseur basse pression d'avoir une vitesse de rotation différente et plus élevée qu'une vitesse de rotation de la soufflante. La vitesse de rotation de la soufflante étant limitée dans le cas d'un flux d'air subsonique, la vitesse de rotation d'un compresseur basse pression dans une turbomachine comprenant un tel réducteur peut donc être plus élevée que dans une turbomachine ne comprenant pas un tel réducteur.

Dans un tel compresseur basse pression, la fonction de rétention du carter au droit des aubes rotoriques est renforcée. En effet, la vitesse de rotation plus élevée du compresseur permise par la présence du réducteur implique une énergie cinétique plus élevée des aubes rotoriques du compresseur lors de son fonctionnement. En cas de casse et/ou de détachement d'une aube rotorique, une capacité de rétention renforcée est donc nécessaire afin de limiter les dégâts causés par l'aube détachée dans l'environnement du compresseur basse pression.

Selon différentes caractéristiques supplémentaires de l'invention, qui pourront être prises ensemble ou séparément et qui forment autant de modes de réalisation de l'invention :
- ladite paroi annulaire présente une deuxième zone annulaire, ladite virole de support s'étendant le long desdites première et deuxième zones,
- ledit matériau à feuilletage métallique comprend au moins deux couches de métal et au moins deux couches de matériau composite, les couches de métal alternant avec les couches de matériau composite,
- une couche interne dudit matériau à feuilletage métallique est formée de l'une des couches de métal,
- ledit revêtement de renfort comprend une couche de matériau abradable,
- ladite couche de matériau abradable est rapportée sur la couche interne du matériau à feuilletage métallique,
- ledit revêtement de renfort comprend des cartouches se succédant angulairement sur 360° autour dudit axe longitudinal,
- ledit matériau composite est à matrice organique,
- ladite première zone est destinée à être affleurée à un jeu près par un bord distal d'aubes de l'étage rotorique du compresseur,
- lesdites aubes de l'étage rotorique sont en métal,
- ladite première zone est destinée à se trouver au niveau d'une partie amont du carter selon le sens d'écoulement du fluide,
- ladite deuxième zone est destinée à se trouver au niveau d'une partie aval du carter selon le sens d'écoulement du fluide,
- ladite deuxième zone est destinée à se trouver au droit d'un étage statorique dudit compresseur,
- ledit carter comprend des aubes, notamment statoriques, fixés à ladite deuxième zone,
- la ou lesdites aubes statoriques sont formées en matériau composite et présentent au moins un logement, non-fileté,
- ledit carter est configuré pour qu'un passage d'éléments de fixation dans le ou les logements soit radialement décalé par rapport à un axe longitudinale de l'aube statorique,
- ladite deuxième zone est destinée à délimiter une veine pour un flux divergent dudit fluide,
- une première extrémité longitudinale du carter est destinée à être assujettie à un premier support,
- une deuxième extrémité longitudinale du carter, opposée à la première extrémité, est destinée à être assujetti à un deuxième support,
- ledit carter comprend au moins une bride de fixation, notamment audit premier support et/ou audit deuxième support,
- ledit carter présente une partie annulaire en matériau composite, ladite partie annulaire étant munie d'un corps et d'un flanc latéral raccordé audit corps par un coude,
- ladite bride de fixation comprend une première partie configurée pour renforcer ladite partie annulaire du carter au niveau dudit coude et une deuxième partie configurée pour centrer ladite partie annulaire sur un support.

De préférence :
- ledit revêtement de renfort délimite une veine de circulation de fluide au niveau de la première zone,
- ladite virole de support délimite une veine de circulation de fluide au niveau de la deuxième zone.

Ladite paroi annulaire est de préférence dépourvue de revêtement de renfort au niveau de la deuxième zone. Cela permet de bénéficier des performances de rétention associées au revêtement de renfort au niveau de la première zone de la paroi annulaire tout en diminuant la masse associée à la deuxième zone de la paroi annulaire grâce à l'usage de matériau composite.

La deuxième zone est au moins partiellement, de préférence entièrement, dépourvue de matériau à feuilletage métallique. De préférence, seule la première zone est pourvue de matériau à feuilletage métallique.

De préférence, ladite virole de support est monobloc. Cela facilite l'assemblage du carter.

De préférence, ladite virole de support s'étend continûment le long desdites première et deuxième zones. Une telle virole diminue le nombre de parties à assembler pour former le carter.

L'invention concerne également un compresseur basse pression, de préférence rapide, de turbomachine d'aéronef comprenant un carter tel que décrit plus haut.

Selon une variante de réalisation de l'invention, les aubes statoriques sont en contact mécanique non immobilisant avec la deuxième zone. Lesdites aubes statoriques sont éventuellement attachées de manière radialement interne à une virole interne du compresseur. Alternativement, lesdites aubes statoriques sont attachées de manière radialement externe au carter, au niveau de la deuxième zone du carter du compresseur.

L'invention concerne encore une turbomachine d'aéronef comprenant un compresseur tel que décrit plus haut.

Selon un mode de réalisation de l'invention, ladite turbomachine comprend une soufflante et un réducteur de vitesse entre ladite soufflante et ledit compresseur.

Selon un mode de réalisation de l'invention, ladite turbomachine comprend :
- un bec de séparation des flux,
- une veine amont,
- une veine aval radialement interne,
- une veine aval radialement externe,
le bec étant configuré pour séparer un flux d'air issu de la veine amont en un premier flux d'air traversant la veine aval radialement interne et un deuxième flux d'air traversant la veine aval radialement externe.

De préférence, ladite première zone délimite la veine amont. De préférence, ladite deuxième zone délimite la veine aval radialement externe.

Dans une telle turbomachine, les premières et deuxièmes zones appartiennent respectivement à la veine amont et à la veine aval radialement externe.

Dans un exemple de réalisation de l'invention, la première zone et la deuxième zone sont situées en amont et en aval du bec, respectivement, selon le sens d'écoulement du flux d'air. Dans un exemple de réalisation de l'invention, la première zone et la deuxième zone sont préférablement situées en amont et en aval du bec, respectivement, selon l'axe longitudinal X.

De préférence, ledit revêtement de renfort délimite la veine amont. En d'autres termes, une surface radialement interne du revêtement de renfort appartient à une surface radialement interne de la veine amont. De préférence, ladite virole de support délimite la veine aval radialement externe. En d'autres termes, une surface radialement interne de la veine aval radialement interne comprend une surface radialement interne de ladite virole de support.

De préférence, ledit revêtement de renfort s'étend en amont du bec selon la direction d'écoulement du flux dans le compresseur. De préférence, ledit revêtement de renfort s'étend seulement en amont du bec selon la direction d'écoulement du flux dans le compresseur.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
[Fig. 1] illustre de façon schématique, une section selon un plan de coupe longitudinal d'un exemple de carter selon un premier aspect de l'invention ;
[Figs. 2a et 2b] illustrent de façon schématique, une section selon un plan de coupe longitudinal d'exemples de carter selon un deuxième aspect de l'invention ;
[Fig. 3] détaille une partie repérée III aux figures 2a et 2b ;
[Fig. 4] illustre de façon schématique une section selon un plan de coupe longitudinal d'une partie d'un exemple de carter selon un troisième aspect de l'invention ;
[Fig. 5] illustre de façon schématique une section selon un plan de coupe longitudinal d'un exemple de bride de fixation selon un quatrième aspect de l'invention.
[Fig. 6] illustre de façon schématique une section selon un plan de coupe longitudinal d'un exemple d'une partie d'une turbomachine comprenant un carter selon l'invention.

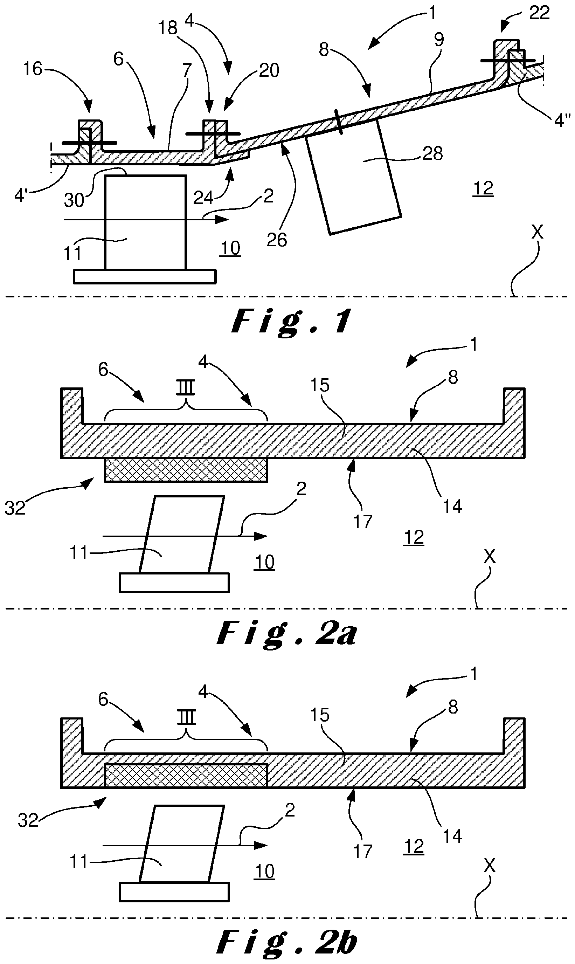

Comme illustré aux figures 1, 2a et 2b, l'invention concerne tout d'abord un carter 1 de compresseur basse pression, de préférence rapide, d'une turbomachine d'aéronef. Ledit compresseur et ladite turbo machine sont destinés à être traversés par un fluide, notamment un flux d'air, illustré par la flèche repérée 2.

Ledit carter 1 présente préférentiellement une forme de révolution autour d'un axe longitudinal s'étendant selon une direction repérée X. Dans le cadre de la présente demande, ledit axe longitudinal est également désigné 'axe longitudinal du carter' ou 'axe longitudinal X'. Il comprend une paroi annulaire 4, notamment interne, s'étendant le long de l'axe longitudinal dudit carter 1. A ces figures, seule une partie de la section du carter 1 a été illustrée, la partie diamétralement opposée ne l'ayant pas été ainsi qu'une éventuelle paroi externe dudit carter.

La paroi annulaire 4, ou une portion de la paroi annulaire 4, peut en outre s'étendre selon la direction radiale autour de l'axe longitudinal du carter. Par exemple, un rayon intérieur de la paroi annulaire 4 varie en fonction d'une position le long de l'axe longitudinal. Alternativement, le rayon intérieur de la paroi annulaire 4, ou d'une portion de la paroi annulaire 4, est constant en fonction de la position le long de l'axe longitudinal. Le rayon intérieur de la paroi annulaire 4 est mesuré à partir de, et radialement par rapport à, l'axe longitudinal du carter.

Une première extrémité longitudinale du carter 1 est destinée à être fixée à un premier support, notamment annulaire, du compresseur. Une deuxième extrémité longitudinale du carter 1, opposée à la première extrémité, est destinée à être fixée à un deuxième support, notamment annulaire, du compresseur.

Ledit carter 1 comprend éventuellement d'autres portions annulaires, rapportées sur ladite paroi annulaire 4 et la prolongeant en amont et/ou aval selon le sens de circulation du flux d'air.

Sur la figure 1, les pièces repérées 4', 4", partiellement illustrées, représentent alternativement ledit premier support et/ou ledit deuxième support du compresseur permettant la fixation du carter 1 et/ou des pièces du carter 1 prolongeant en amont et/ou en aval ladite paroi annulaire 4.

Ladite paroi annulaire 4 présente une première zone annulaire 6 et une deuxième zone annulaire 8. Ladite première zone 6 est destinée à se trouver au droit d'un étage rotorique 10 dudit compresseur. Ledit étage rotorique 10 présente ici une ou des aubes 11 et ladite première zone 6 du carter 1 est située au niveau desdites aubes 11. Ladite deuxième zone 8 est destinée à se trouver au droit d'un étage statorique 12 dudit compresseur.

Ladite première zone 6 se trouve, par exemple, au niveau d'une partie amont du carter 1 selon le sens d'écoulement du fluide. Ladite deuxième zone 8 se trouve, par exemple, au niveau d'une partie aval du carter 1 selon le sens d'écoulement du fluide. Ladite première zone 6 et ladite deuxième zone 8 sont avantageusement situées dans un prolongement longitudinal l'une de l'autre.

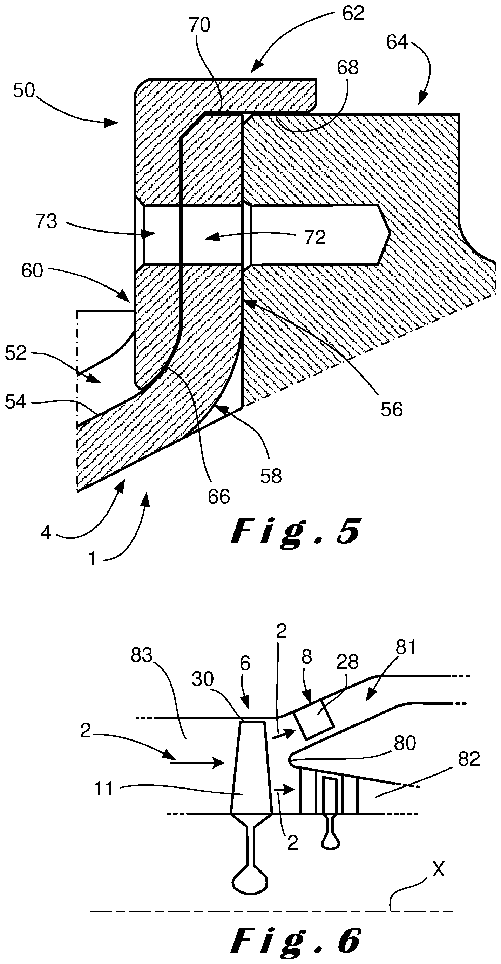

Comme illustré à la figure 6, ladite première zone 6 se trouve, par exemple, en amont d'un bec de séparation 80 des flux de la turbomachine selon le sens d'écoulement du fluide. Ladite deuxième zone 8 se trouve, par exemple, en aval d'un bec de séparation 80 des flux de la turbomachine selon le sens d'écoulement du fluide.

Ladite première zone 6 se trouve, par exemple, au niveau de la veine amont 83 du compresseur basse pression. Ladite deuxième zone 8 se trouve, par exemple, au niveau de la veine aval radialement externe 81 du compresseur basse pression.

Préférentiellement, ladite première zone 6 présente une meilleure capacité de rétention que ladite deuxième zone 8. Ceci est d'autant plus nécessaire dans un compresseur basse pression rapide dans lequel les débris potentiellement générés présentent une vitesse et donc une énergie plus importante.

Préférentiellement, ladite deuxième zone 8 est destinée à délimiter une veine pour un flux divergent dudit fluide. Par « divergent », on entend qu'une direction principale dudit flux s'écarte radialement dudit axe longitudinal du carter selon le sens de circulation dudit flux. Alternativement ou cumulativement, ledit carter 1 comprend des aubes statoriques 28 fixées, notamment boulonnées, à ladite deuxième zone 8, par exemple comme il sera décrit plus loin.

Préférentiellement, un rayon intérieur de la paroi annulaire 4 est sensiblement constant au niveau de ladite première zone 6 destinée à se trouver au droit d'un étage rotorique 10 dudit compresseur. En d'autres termes, la paroi annulaire 4 au niveau de ladite première zone 6 s'étend de préférence principalement selon la direction longitudinale. Préférentiellement, le rayon intérieur de la paroi annulaire 4 au niveau de ladite deuxième zone 8 est croissant, de préférence strictement croissant, selon le sens de circulation du flux. En d'autres termes, la paroi annulaire 4 au niveau de ladite deuxième zone 8 s'écarte de préférence radialement dudit axe longitudinal selon le sens de circulation dudit flux, c'est-à-dire de l'amont vers l'aval de la paroi annulaire. Le rayon intérieur de la paroi annulaire 4 est mesuré à partir de l'axe longitudinal du carter, et selon la direction radiale par rapport à l'axe longitudinal du carter.

De préférence, ladite turbomachine comprend un bec 80 de séparation des flux. Un exemple d'un tel bec 80 est représenté à la figure 6. Ledit bec 80 est configuré pour séparer le flux d'air traversant la turbomachine en deux flux radialement interne et externe, respectivement. Sur la figure 6, les sens d'écoulement des flux d'air sont représentés par les flèches 2.

Au droit du bec 80, une veine amont 83 de la turbomachine se divise en une veine aval radialement externe 81 et une veine aval radialement interne 82. De la sorte, le flux d'air en amont du bec est divisé, c'est-à-dire séparé, en deux flux d'air distincts en aval du bec.

Le bec sépare une veine radialement externe 81 pour le passage du fluide d'une veine radialement interne 82 pour le passage du fluide. De préférence, ladite veine radialement interne et/ou externe est annulaire autour de l'axe longitudinal X. La veine radialement interne est plus proche de l'axe longitudinal que la veine radialement externe. De préférence, le bec 80 s'étend circonférentiellement autour de l'axe longitudinal.

De préférence, ladite première zone 6 et ladite deuxième zone 8 sont positionnées de part et d'autre du bec 80 selon la direction longitudinale X. Ladite première zone est en amont du bec. Ladite deuxième zone 8 est en aval du bec. Ladite deuxième zone 8 est destinée à délimiter la veine annulaire radialement externe, préférablement pour un flux divergent dudit fluide.

Selon un premier aspect de l'invention correspondant à la figure 1, ladite première zone 6 et ladite deuxième zone 8 sont respectivement formées d'un premier tronçon 7 et d'un deuxième tronçon 9, distincts l'un de l'autre. On entend par là que lesdits premier et deuxième tronçons 7, 9 ne sont pas en continuité de matière l'un de l'autre. Ils sont au contraire avantageusement rapportés l'un sur l'autre, directement ou indirectement. Ledit premier tronçon comprend de préférence un matériau métallique, ledit deuxième tronçon étant de préférence en matériau composite.

De préférence, ledit premier tronçon et ledit deuxième tronçon sont en amont et en aval, respectivement, selon le sens de circulation du fluide dans la turbomachine.

Grâce aux tronçons formant respectivement les zones 6, 8 du carter selon ce premier aspect de l'invention, lesdites première et deuxième zones 6, 8 du carter sont indépendantes l'une de l'autre. Elles peuvent ainsi être formées d'un ou de matériaux assurant la fonction qui leur sont propres au lieu d'avoir recours à un carter monobloc fait d'un seul et même matériau, éventuellement plus lourd et/ou plus onéreux, et risquant de ne pas remplir au mieux les spécifications de l'ensemble des zones.

De préférence, le rayon intérieur de la paroi annulaire 4 est sensiblement constant au niveau du premier tronçon 7 (ou de la première zone 6) et la paroi annulaire 4 s'écarte radialement dudit axe longitudinal au niveau du deuxième tronçon 9 (ou de la deuxième zone 10). Dans cette configuration, il est possible de profiter des deux tronçons pour séparer la partie du carter s'étendant principalement selon la direction longitudinale de la partie du carter qui est divergente selon le sens de circulation dudit flux. Cela facilite la fabrication et l'assemblage du carter.

Le positionnement de la jonction entre les premier et deuxième tronçons est préférablement réalisé dans une zone sans fonction de rétention ni de fixation du stator. Le positionnement de la jonction entre les premier et deuxième tronçons est par exemple réalisé au niveau du bec 80 selon la direction longitudinale X.

Pour assurer la fonction de rétention qui lui est avantageusement conférée, ledit premier tronçon 7 comprend préférentiellement un matériau métallique, notamment un bloc de matériau métallique tel que de l'aluminium, un alliage d'aluminium, du titane et/ou un alliage de titane. Alternativement, il s'agit d'un feuilletage métallique qui sera décrit plus en détail plus bas en relation avec un deuxième aspect de l'invention.

Ledit premier tronçon 7 comprend, par exemple, des cartouches formant des secteurs angulaires se succédant sur 360° autour dudit axe longitudinal du carter 1.

Selon un premier mode de réalisation, ledit premier tronçon 7 est, par exemple, continu et formé d'un même bloc de matière, notamment du même bloc de matériau métallique et/ou du même feuilletage métallique, sur l'ensemble de sa circonférence et de son épaisseur.

Alternativement, ledit premier tronçon 7 est formé dudit bloc de matériau métallique et/ou dudit feuilletage métallique, pris sous la forme de cartouches telles qu'évoquées plus haut. Dans un tel cas, lesdites cartouches sont avantageusement assujetties audit deuxième tronçon 9.

Alternativement encore, ledit premier tronçon 7 comprend une virole de support. Il comprend en outre un revêtement de renfort comprenant ledit matériau à feuilletage métallique, ledit revêtement de renfort étant alors rapporté sur une face intérieure de ladite virole, par exemple de façon continue sur toute sa circonférence ou sous la forme de cartouches telles qu'évoquées plus haut. Ladite virole est formée, notamment en matériau composite. Une telle configuration du premier tronçon est décrite plus bas dans le cadre du deuxième aspect de l'invention dans lequel la virole de support 14 est continue sur l'ensemble des premières et deuxième zones 6, 8 mais présente une première zone 6 présentant la configuration avec couche de support 14 et revêtement de renfort 32 en cause. Dans le cadre du premier aspect de l'invention, selon l'alternative évoquée, le premier tronçon 7 est rapporté sur le deuxième tronçon 9 par l'intermédiaire de ladite virole de support.

De préférence, le revêtement de renfort 32 est reçu dans un renfoncement de la virole de support 14. Un exemple est illustré à la figure 2b. Le revêtement de renfort comprend une surface interne, c'est-à-dire radialement interne par rapport à l'axe longitudinal X. La virole de support comprend une surface interne, c'est-à-dire radialement interne par rapport à l'axe longitudinal X. Par exemple, la surface interne de la paroi annulaire 4 située au niveau de la première zone comprend, ou est formée par, les surfaces internes du revêtement de renfort et de la virole de support. Par exemple, les surfaces internes du revêtement de renfort et de la virole forment successivement et dans cet ordre, la surface interne de la paroi annulaire selon la direction d'écoulement du fluide au sein du carter. Dans l'exemple illustré à la figure 2b, la surface interne de la virole, puis la surface interne du revêtement de renfort, puis la surface interne de la virole, forment successivement selon la direction longitudinale et dans cet ordre, la surface interne de la paroi annulaire. Par exemple, les surfaces internes du revêtement de renfort et de la virole délimitent une veine de circulation de fluide au niveau de la première zone 6.

De préférence, au niveau de l'interface entre les surfaces internes du revêtement de renfort et de la virole de support, celles-ci sont alignées en continuité l'une avec l'autre. Une telle continuité de la paroi améliore l'écoulement du fluide. De préférence, au niveau de l'interface entre les surfaces internes du revêtement de renfort et de la virole de support, celles-ci ont des rayons mesurés radialement à partir de l'axe longitudinal X qui sont identiques. De préférence, un tel rayon est sensiblement constant dans la première zone 6.

Selon certaines des alternatives évoquées plus haut, on aura compris que lesdites cartouches sont éventuellement formées avec ledit matériau à feuilletage métallique.

Ladite première zone 6 est destinée à être affleurée à un jeu près par un bord distal 30 de la ou des aubes 11 de l'étage rotorique 10 du compresseur. Lesdites aubes 11 de l'étage rotorique 10 sont avantageusement en métal. De la sorte, la configuration métallique de la première zone 6 du carter et de la ou des aubes 11 de l'étage rotorique permet de limiter une dilatation thermique différentielle entre le carter 1 et la ou lesdites aubes 11.

Ledit deuxième tronçon 9 est avantageusement en matériau composite. On évite de la sorte de devoir réaliser un carter tout en métal, cher et lourd. Ledit matériau composite est, par exemple, à matrice organique. Il s'agit notamment d'un matériau comprenant une matrice époxy et/ou des fibres de carbone, avantageusement unidirectionnelles. Il est éventuellement drapé, notamment par robot.

Comme déjà indiqué, ledit premier tronçon 7 et ledit deuxième tronçon 9 sont avantageusement assujettis l'un à l'autre, en particulier sans tronçons intermédiaire.

Ledit premier tronçon 7 comprend avantageusement un épaulement 24 de centrage pour ledit deuxième tronçon 9. Par exemple, ledit deuxième tronçon 9 prend appui sur ledit épaulement 24 par une face intérieure 26 ou extérieure dudit deuxième tronçon 9. De préférence, ledit deuxième tronçon 9 prend appui sur ledit épaulement 24 par une face intérieure 26 dudit deuxième tronçon 9. Dans le cas où le premier tronçon 7 est métallique et le deuxième tronçon 9 est formé d'un matériau composite, le métal se dilatant davantage que le composite avec une augmentation de température, se servir de la surface interne de la partie en matériau composite pour assurer la prise d'appui permet de maintenir le contact et donc le centrage quand la température augmente.

Ledit carter 1 comprend ici en outre des brides d'accrochage 16, 18, 20, 22, préférentiellement circonférentielles, notamment issues de l'un et/ou de l'autre desdits premier et deuxième tronçons 7, 9. Elles sont destinées, par exemple, à un accrochage à l'autre tronçon et/ou à un accrochage aux autres pièces et/ou support 4', 4" du carter et/ou du compresseur. Bien que cela ne soit pas illustré aux figures 1 et 2, le carter 1 comprend éventuellement en outre une ou des brides de fixation telles que décrites plus bas dans le cadre d'un quatrième aspect de l'invention.

Ledit épaulement 24 se trouve ici au niveau de l'une des brides 18, prévue au niveau du premier tronçon 7, en regard de l'une des brides 20, prévue au niveau du deuxième tronçon 9.

Comme illustré aux figures 2a et 2b, selon le deuxième aspect de l'invention, ladite paroi annulaire 4 du carter 1 comprend une virole de support 14, en matériau composite, et un revêtement de renfort 32 comprenant un matériau à feuilletage métallique. Ledit revêtement de renfort se trouve sur la face interne 17 de ladite virole 14, au niveau de ladite première zone 6.

Ladite virole 14 forme ainsi une base, légère et peu onéreuse, de ladite paroi annulaire 4. Ceci constitue un avantage significatif par rapport à paroi annulaire formée d'une virole en métal. On évite en effet de la sorte l'utilisation d'un brut ou bloc de métal dont on retirerait une grande partie de la matière pour ramener la virole à la forme souhaitée. Un tel bloc de métal peut causer des problèmes d'approvisionnement et provoque un gaspillage important de matière.

Ladite virole 14 est en outre renforcée uniquement là où cela est nécessaire, c'est-à-dire la première zone 6, par le matériau à feuilletage métallique qui offre des capacités de rétention supplémentaires et permet de mieux répondre aux exigences d'un compresseur basse pression rapide. En effet, dans un tel cas de figure, si une aube rotorique 11 casse, il faut un carter renforcé pour la retenir compte-tenu de sa plus grande énergie.

Selon cet aspect de l'invention, ladite virole de support 14 s'étend avantageusement le long desdites première et deuxième zones 6, 8 de ladite paroi annulaire 4. Ladite virole 14 forme ainsi une base commune à ces deux zones 6, 8 ce qui renforce encore l'économie de matière comparée à l'utilisation d'un brut ou bloc de métal. On comprend que, dans ce mode de réalisation, ledit matériau de renfort 32 ne s'étend pas le long de ladite deuxième zone 8. En effet, cette deuxième zone 8 n'a pas besoin d'être renforcée.

Ladite virole de support 14 en composite forme préférentiellement une couche externe du carter 1. Autrement dit, ladite virole de support 14 ne présente pas de revêtement métallique sur sa face externe 15.

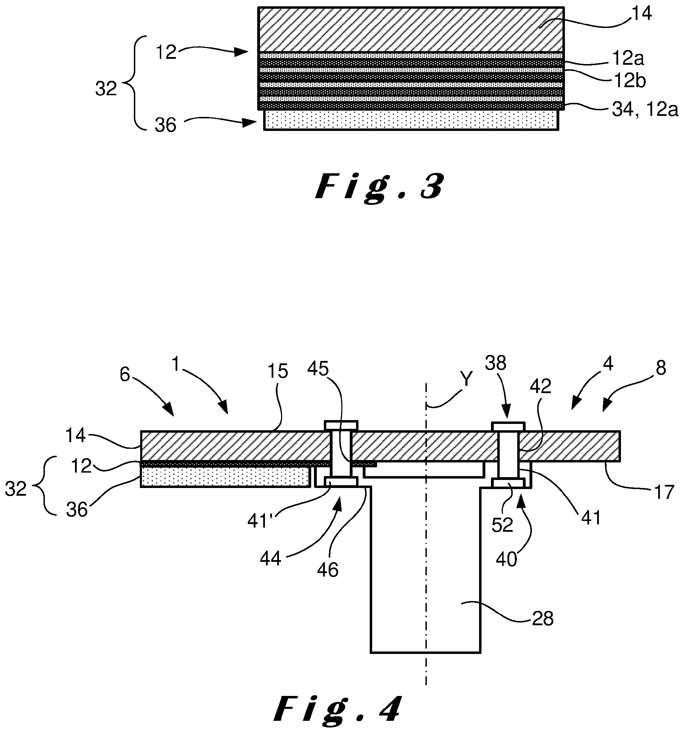

Comme illustré à la figure 3, ledit matériau à feuilletage métallique 12 comprend, par exemple, au moins deux couches de métal 12a et/ou au moins deux couches de matériau composite 12b. Les couches de métal 12a alternent avec les couches de matériau composite 12b. Une couche interne 34 dudit matériau à feuilletage métallique 12 est formée de l'une des couches de métal 12a.

Préférentiellement, ledit revêtement de renfort 32 comprend une couche de matériau abradable 36, rapportée sur la face interne du matériau à feuilletage métallique 12. Ledit matériau abradable est formé, par exemple, d'un matériau qui sera abrasé par les aubes rotoriques 11 lors de la mise en service du compresseur, notamment en phase d'essai. On réalise de la sorte un jeu minimum entre le revêtement de support 32 et lesdites aubes rotoriques 11. Le choix de réaliser la couche interne 34 du matériau à feuilletage métallique 12 en métal permet de faciliter l'adhésion de ladite couche de matériau abradable 36 sur ledit matériau à feuilletage métallique 12. Il est à noter que le revêtement de renfort 32 éventuellement utilisé dans le cadre du premier aspect de l'invention présenté plus haut présente préférentiellement ladite couche de matériau abradable 36.

Ledit matériau à feuilletage métallique 12 est obtenu, par exemple, par cuisson. Ladite cuisson sert à durcir le matériau composite de ses couches 12b. On parle alors parfois de cocuisson. Une telle cuisson ou cocuisson a éventuellement lieu avec la virole de support 14. Autrement dit, on fait cuire le matériau à feuilletage métallique 12 directement avec la virole de support 14, ce qui permet de les fixer l'un à l'autre.

Selon ce deuxième aspect de l'invention comme selon le premier, ledit revêtement de renfort 32, notamment ledit matériau à feuilletage métallique 12, est éventuellement formé de cartouches formées de secteurs angulaires se succédant sur 360° autour dudit axe longitudinal.

Comme expliqué plus haut dans le cadre du premier aspect de l'invention, le revêtement de renfort 32 est de préférence reçu dans un renfoncement de la virole de support 14. Un exemple est illustré à la figure 2b. La surface interne de la paroi annulaire 4 située au niveau de la première zone est formée par les surfaces internes du revêtement de renfort et de la virole de support. Par exemple, les surfaces internes du revêtement de renfort et de la virole forment successivement et dans cet ordre, la surface interne de la paroi annulaire selon la direction d'écoulement du fluide au sein du carter. Dans l'exemple illustré à la figure 2b, la surface interne de la virole, puis la surface interne du revêtement de renfort, puis la surface interne de la virole, forment successivement selon la direction longitudinale la surface interne de la paroi annulaire.

De préférence, au niveau de l'interface entre les surfaces internes du revêtement de renfort et de la virole de support, celles-ci sont alignées en continuité l'une avec l'autre. De préférence, au niveau de l'interface entre les surfaces internes du revêtement de renfort et de la virole de support, les surfaces internes du revêtement de renfort et de la virole de support sont alignées radialement. Une telle continuité de la paroi améliore l'écoulement du fluide.

Au niveau de l'interface entre les surfaces internes du revêtement de renfort et de la virole de support, les surfaces internes du revêtement de renfort et de la virole de support ont préférablement des rayons mesurés radialement à partir de l'axe longitudinal X qui sont identiques. De préférence, un tel rayon est sensiblement constant dans la première zone 6.

Ledit matériau composite de la virole 14 et/ou des couches 12b du matériau à feuilletage métallique est, par exemple, à matrice organique. Il s'agit notamment d'un matériau comprenant une matrice époxy et/ou des fibres de carbone, avantageusement unidirectionnelles. Il est éventuellement drapé, notamment par robot, en particulier pour le cas de la virole 14.

Comme illustré à la figure 4, selon un troisième aspect de l'invention, le carter 1 comprend une paroi annulaire, notamment la paroi annulaire 4 selon la configuration du premier aspect ou du deuxième aspect de l'invention, au moins une aube, notamment la ou les aubes statorique 28 précédemment évoquées, et des éléments 38 de fixation de ladite aube 28 sur ladite paroi annulaire 4. Comme dans les figures 1 et 2, seule une partie du carter 1 a été illustrée, la partie diamétralement opposée ne l'ayant pas été ainsi qu'une éventuelle paroi externe dudit carter.

Dans le troisième aspect de l'invention, le carter appartient de préférence à un ensemble statorique d'une turbomachine d'aéronef comprenant :
- un carter de compresseur basse pression, ledit carter (1) comprenant une paroi annulaire (4) s'étendant le long d'un axe longitudinal dudit carter,
- au moins une aube (28) et des éléments de fixation (38) de ladite aube (28) sur ladite paroi annulaire (4), ladite aube (28) étant formée en matériau composite à matrice métallique et présentant au moins un logement (40), non-fileté,
ledit ensemble statorique étant configuré pour qu'un passage des éléments de fixation (38) dans le ou les logements (40) soit radialement décalé par rapport à un axe longitudinal (Y) de l'aube (28).

Il est à noter que ledit carter 1 selon ce troisième aspect de l'invention est un carter de compresseur basse pression d'une turbomachine d'aéronef, de préférence un carter de compresseur basse pression rapide.

Ladite aube 28 est formée en matériau composite. Ledit matériau composite de l'aube 28 comprend, par exemple, une matrice métallique, notamment formée d'aluminium.

Ladite aube 28 comprend un pied de l'aube pour coupler mécaniquement ladite aube avec ladite paroi annulaire. Le pied d'une aube est parfois appelé `base' ou 'plateforme' de l'aube.

Ladite aube 28 comprend une pale de première aube délimitée par une tête d'aube et le pied de l'aube. La pale est fixée sur le pied de l'aube. L'aube s'étend entre le pied et la tête de l'aube le long d'un axe longitudinal de l'aube Y.

L'axe longitudinal de l'aube Y est différent de l'axe longitudinal du carter s'étendant selon la direction repérée X. De préférence, l'axe longitudinal de l'aube Y est sensiblement aligné selon la direction radiale autour de l'axe longitudinal du carter.

Ladite aube 28 présente au moins un logement 40, non-fileté. Par non-fileté, on entend que ledit logement est destiné à permettre un passage mais non un engagement d'une vis ou boulon. Ses parois sont avantageusement lisses. Contrairement à un orifice fileté, ledit logement peut donc être formé dans l'épaisseur du matériau composite de l'aube 28 sans risquer de l'endommager et/ou de l'affaiblir.

Ledit carter 1 est configuré pour qu'un passage des éléments de fixation 38 dans le ou les logements 40 soit radialement décalé par rapport à un axe longitudinal Y de l'aube statorique 28.

On dispose de la sorte d'aubes 28 plus légères par le choix du matériau qui les compose, à savoir un matériau composite à matrice métallique plutôt qu'un matériau métallique. En outre, comme les éléments de fixation 38 ne sont pas au centre de l'aube 28, ils permettent un calage angulaire de l'aube dans le flux d'air.

Lesdits éléments de fixation 38 sont avantageusement au nombre de deux. Ceci permet de limiter leur nombre tout en assurant une liaison satisfaisante et le calage angulaire évoqué plus haut. Ils sont ici diamétralement opposés par rapport à l'axe longitudinal Y de l'aube.

Ladite aube 28 comprend un pied 44. Ledit pied 44 de l'aube 28 est éventuellement évidé pour limiter encore le poids de l'aube 28. Ledit pied 44 de l'aube 28 présente lesdits logements 40.

La plateforme ou pied de l'aube s'étend essentiellement selon la direction radiale autour de l'axe longitudinal Y de l'aube. De préférence, le pied de l'aube comprend une face interne 46 définissant un profil d'une veine pour un écoulement de fluide. La face interne s'étend à partir de la pale et essentiellement radialement autour de l'axe longitudinal Y de l'aube.

De préférence, l'aube présente deux logements 40 situés de part et d'autre de la pale selon la direction longitudinale X du carter.

De préférence, l'aube présente deux logements 40 situés en amont et en aval de la pale selon le sens d'écoulement du fluide, respectivement.

Selon le mode de réalisation illustré, lesdits logements 40 définissent avantageusement des orifices débouchant 41 pour le passage des éléments de fixation à travers l'aube 28. Ladite paroi annulaire 4 présente, notamment, des lumières 42. Lesdites lumières 42 sont situées dans un prolongement axial desdits orifices débouchant 41. Les orifices débouchant traversent de préférence la face interne du pied de l'aube.

Lesdits éléments de fixation 38 prennent appui d'une part contre la face externe 15 de ladite paroi annulaire 4 et d'autre part contre la face interne 46 dudit pied 44. Lesdits éléments de fixation 38 comprennent, notamment, des boulons, comme représenté. En variante, il pourra s'agir, par exemple, de rivets.

De préférence, l'ensemble statorique est configuré de sorte que, lorsque l'aube est mécaniquement couplée à la paroi annulaire par les éléments de fixation 38, le calage de l'aube 28 est déterminé par le positionnement relatif entre les logements 40 de l'aube et les lumières 42 de la paroi annulaire 4 traversés par les éléments de fixation. Cela facilite l'assemblage de l'ensemble statorique.

Dans le mode de réalisation avantageux où l'ensemble statorique comprend deux éléments de fixations 38 et deux logements 40 et deux lumières 42, un segment reliant des centres des deux lumières est par exemple décalé angulairement par rapport à l'axe longitudinal du carter X.

On peut noter que lesdits orifices débouchant 41 présentent ici un épaulement 41' permettant d'accueillir une tête 52 desdits boulons de manière à ce que ladite tête 52 soit au moins partiellement, voire entièrement logées dans lesdits orifices débouchant 41.

En variante, non-illustrée, ladite aube statorique comprend au moins un insert, situé dans ledit logement, ledit insert présentant un ou des orifices taraudés permettant un vissage de l'aube sur la paroi annulaire du carter. Dans cette variante, même si l'on a recours à un vissage, le ou les logements formés dans l'aube restent non-filetés puisque ce sont les inserts emmanchés dans le ou lesdits logements qui présentent le taraudage nécessaire au vissage.

Selon le mode de réalisation illustré, ladite paroi annulaire 4 comprend la virole de support 14, en matériau composite, et le revêtement de renfort 32, évoqués plus haut, notamment en relation avec le deuxième aspect de l'invention. Le matériau à feuilletage métallique 12 se trouve sur la face interne 17 de ladite virole 14, au niveau de ladite première zone 6.

La ou lesdites aubes 28 et ledit revêtement de renfort 32, notamment ledit matériau à feuilletage métallique 12 et/ou ladite couche de matériau abradable 36, sont préférentiellement en butée l'un sur l'autre, notamment par l'intermédiaire dudit pied 44 de l'aube 28.

De préférence, l'ensemble statorique est configuré de sorte qu'une portion aval du matériau à feuilletage métallique 12 et/ou de la couche de matériau abradable 36 est mécaniquement couplée à l'aube et à la paroi annulaire par compression entre une portion amont du pied 44 de l'aube et la virole de support 14. Les portions amont et aval des pièces sont déterminées selon le sens d'écoulement du fluide dans l'ensemble statorique. Ladite compression est de préférence exercée par un ou des éléments de fixation 38.

A la figure 4, ladite butée est réalisée au niveau de la couche de matériau abradable 36. Ledit matériau à feuilletage métallique 12 présente au moins un passage 45 traversé par l'un desdits éléments de fixation 38.

De préférence, une épaisseur du pied 44 de l'aube 28 mesurée selon la direction longitudinale Y de l'aube diminue strictement entre l'aval et l'amont du pied. Cela permet de compenser la surépaisseur due à la présence du matériau à feuilletage métallique 12 et/ou de la couche de matériau abradable 36 entre la partie amont uniquement du pied et la virole de support. De préférence, la face interne 17 de la virole de support 14 est rectiligne au niveau du pied de l'aube. Les portions amont et aval des pièces sont déterminées selon le sens d'écoulement du fluide dans l'ensemble statorique.

Comme illustré à la figure 5, selon son quatrième aspect, l'invention concerne une bride de fixation 50 pour un carter, notamment un carter de compresseur basse pression, éventuellement rapide, d'une turbomachine d'aéronef. Comme dans les figures 1, 2a, 2b, et 4, seule une partie du carter a été illustrée, la partie diamétralement opposée ne l'ayant pas été ainsi qu'une éventuelle paroi externe dudit carter.

Ledit carter présente une partie annulaire 52, en matériau composite. Il s'agit éventuellement de la paroi annulaire 4 du carter 1 des précédents aspects de l'invention, dans les modes de réalisation correspondant.

Ladite partie annulaire 52 est munie d'un corps 54 et d'un flanc latéral 56 raccordé audit corps 50 par un coude 58.

Ladite bride 50 comprend une première partie 60 configurée pour renforcer ladite partie annulaire 52 du carter 1 au niveau dudit coude 58 et une deuxième partie 62 configurée pour centrer ledit carter 1 sur un support 64.

Selon cet aspect de l'invention, grâce auxdites parties spécifiques 60, 62, la bride de fixation 50 permet à la fois un renfort du carter 1 au niveau d'une zone risquant une délamination, à savoir le coude 58, et un centrage du carter 1.

Le délaminage, ou la délamination, est généralement décrit comme un mode de rupture caractéristique d'un matériau qui se cisaille longitudinalement dans un plan perpendiculaire à son épaisseur. Il en résulte des couches, ou des strates, disjointes qui finissent par se séparer.

Ladite bride de fixation 50 est préférentiellement annulaire. Selon une première variante, elle est angulairement continue. Selon une autre variante, elle est formée de portions angulaires se succédant sur 360° autour de l'axe longitudinal du carter 1.

Ladite première partie 60 est radialement interne et/ou ladite deuxième partie 62 est radialement externe par rapport à l'axe longitudinal du carter.

Ladite première partie 60 présente une forme destinée à épouser ledit coude 58, notamment à l'intérieur dudit coude 58. Elle est avantageusement formée d'un bord interne 66, notamment arrondi, de ladite bride 50.

Ladite bride 50 présente ici une face interne 68 destinée à définir une butée, ladite face interne 68 définissant ladite deuxième partie 62 de la bride 60. Préférentiellement, ladite deuxième partie 62 réalise le centrage de ladite partie annulaire par un contact avec une surface radialement externe du support 64.

Dans le mode de réalisation illustré, ladite deuxième partie 62 coiffe radialement un bord libre 70 dudit flanc latéral 56. Ladite bride 50 confère de la sorte une protection dudit bord libre 70, notamment une protection au feu ce qui est d'autant plus opportun dans le cas d'un bord libre en matériau composite.

Ladite bride 50 présente, par exemple, une section droite en forme de L. Une grande branche du L présente un bord libre définissant ledit bord interne 66. Une petite branche du L définit ladite face interne 68 formant butée.

Ladite bride 50 et/ou ledit flanc latéral 56 présente des orifices de passage 73, 72 d'éléments de fixation sur ledit support 64. Ledit support 64 présente un alésage, éventuellement taraudé dans lequel lesdits élément de fixation sont destinés à s'engager. Lesdits éléments de fixation n'ont pas été illustrés à la figure 4.

Ledit support 64 est formé, par exemple, d'une bride d'accrochage, notamment de l'une des brides d'accrochage 16, 18, 20, 22 évoqué plus haut. Ledit support 64 est préférentiellement métallique.

Ladite bride de fixation est formée, par exemple, d'un matériau métallique, notamment en aluminium et/ou en titane.

Selon les premier et deuxième aspects de l'invention, ladite bride de fixation 50 est éventuellement utilisée entre la première zone 6 et la pièce voisine 4' quand la première zone 6 comprend une virole de support 14 en matériau composite. Elle est alors du côté de la première zone 6. Elle est aussi éventuellement utilisée entre la deuxième zone 8 et la pièce voisine 4". Elle est alors du côté de ladite deuxième zone 8.

Dans le premier mode de réalisation, elle est encore éventuellement utilisée entre les premier et le deuxième tronçons 7, 9, notamment du côté du deuxième tronçon 9.

Bien qu'il ne soit pas illustré en totalité, ledit compresseur basse pression, de préférence rapide, de turbomachine d'aéronef selon l'invention présente ledit étage rotorique 10 et ledit étage statorique 12. Il comprend en outre ledit carter 1 des précédents aspects de l'invention.

En variante aux modes de réalisation évoqué plus haut dans lesquels les aubes statoriques 28 sont assujetties au carter 1, lesdites aubes statoriques 28 sont en contact mécanique non immobilisant avec la deuxième zone 8. Dans cette nouvelle variante, lesdites aubes statoriques 28 sont, par exemple, attachées de manière radialement interne à une virole interne du compresseur.

La turbomachine d'aéronef selon l'invention comprend préférentiellement une soufflante et un réducteur de vitesse entre ladite soufflante et ledit compresseur. Ledit réducteur permet au compresseur basse pression d'avoir une vitesse de rotation plus rapide qu'une vitesse de rotation de la soufflante. Ladite vitesse de rotation de la soufflante est ainsi plus lente et compatible avec flux d'air subsonique.

L'invention considérée selon ses différents aspects comprend différentes pièces comprenant chacune un ou des matériaux composites. Les matériaux composites des différentes pièces sont identiques ou différents. Par exemple, ladite virole est formée en matériau composite de ladite virole. Par exemple, ledit premier tronçon est formé en matériau composite du premier tronçon et/ou présente une partie annulaire en matériau composite du premier tronçon. Par exemple, ledit deuxième tronçon est formé en matériau composite du deuxième tronçon et/ou présente une partie annulaire en matériau composite du deuxième tronçon. Par exemple, ladite virole est formée en matériau composite de ladite virole. Par exemple, la ou lesdites aubes statoriques sont formées en matériau composite d'aube. Par exemple, le matériau à feuilletage métallique comprend le matériau composite des couches du matériau à feuilletage métallique.

Les matériaux composites formant des pièces distinctes du dispositif de l'invention sont sélectionnés indépendamment parmi un ou plusieurs types de matériaux composites, et peuvent donc être identiques ou différents entre eux.

## Revendications

1. Carter de compresseur basse pression d'une turbomachine d'aéronef ledit carter (1) comprenant une paroi annulaire (4) s'étendant le long d'un axe longitudinal dudit carter, ladite paroi annulaire (4) présentant un première zone annulaire (6) destinée à se trouver au droit d'un étage rotorique (10) dudit compresseur, ladite paroi annulaire (4) comprenant une virole de support (14), en matériau composite, et un revêtement de renfort (32) comprenant un matériau à feuilletage métallique (12), ledit revêtement de renfort (32) se trouvant sur une paroi interne (17) de ladite virole (14) au niveau de ladite première zone (6).

2. Carter selon la revendication précédente dans lequel ladite paroi annulaire (4) présente une deuxième zone annulaire (8), ladite virole de support (14) s'étendant le long desdites première et deuxième zones (6, 8).

3. Carter selon la revendication précédente dans lequel ladite deuxième zone (8) est destinée à se trouver au droit d'un étage statorique (12) dudit compresseur.

4. Carter selon l'une des revendications 2 ou 3 et configuré de sorte que :
• ledit revêtement de renfort (32) délimite une veine de circulation de fluide au niveau de la première zone (6),
• ladite virole de support (14) délimite une veine de circulation de fluide au niveau de la deuxième zone (8).

5. Carter selon l'une quelconque des revendications précédentes dans lequel ledit matériau à feuilletage métallique (12) comprend au moins deux couches de métal (12a) et au moins deux couches de matériau composite (12b), les couches de métal (12a) alternant avec les couches de matériau composite (12b).

6. Carter selon la revendication précédente dans lequel une couche interne (34) dudit matériau à feuilletage métallique est formée de l'une des couches de métal (12a).

7. Carter selon la revendication précédente dans lequel ledit revêtement de renfort (32) comprend une couche de matériau abradable (36), rapportée sur la couche interne (34) du matériau à feuilletage métallique.

8. Carter selon l'une quelconque des revendications précédentes dans lequel ledit revêtement de renfort (32) comprend des cartouches se succédant angulairement sur 360° autour dudit axe longitudinal.

9. Carter selon l'une quelconque des revendications précédentes dans lequel ladite virole de support (14) est monobloc.

10. Compresseur basse pression, rapide, de turbomachine d'aéronef comprenant un carter (1) selon l'une quelconque des revendications précédentes.

11. Turbomachine d'aéronef comprenant un compresseur selon la revendication précédente.

12. Turbomachine selon la revendication précédente comprenant une soufflante et un réducteur de vitesse entre ladite soufflante et ledit compresseur.

13. Turbomachine selon l'une des revendications 11 ou 12, comprenant :
• un bec (80) de séparation des flux,
• une veine amont (83),
• des veines aval radialement interne (82) et radialement externe (81),
le bec (80) étant configuré pour séparer un flux d'air issu de la veine amont (83) en un premier flux d'air traversant la veine aval radialement interne (82) et un deuxième flux d'air traversant la veine aval radialement externe (81),
ladite première zone annulaire (6) de la paroi annulaire (4) délimitant la veine amont (83),
ladite deuxième zone annulaire (8) de la paroi annulaire (4) délimitant la veine aval radialement externe (81).
